# EUROPÄISCHE PATENTANMELDUNG

(11) **EP 2 522 222 A2**
(43) Veröffentlichungstag der Anmeldung: **14.11.2012**
(21) Anmeldenummer: 12401059.6
(22) Anmeldetag: 02.04.2012
(51) Int. Cl.: A01M 7/00

(54) **Landwirtschaftliche Feldspritze**

(30) Priorität: 19.04.2011 DE 102011002152
(71) Anmelder: Amazonen-Werke H. Dreyer GmbH & Co. KG, 49205 Hasbergen (DE)
(72) Erfinder: Austermann, Stefan, 48291 Telgte (DE); Dreyer, Justus, 49076 Osnabrück (DE); Kiefer, Stefan, 49074 Osnabrück (DE); Resch, Rainer, 49170 Hagen a TW (DE)

(57) **Zusammenfassung**

Landwirtschaftliche Feldspritze (1) wobei Mittel für die Beeinflussung der Betriebsweise der Feldspritze (1) zur Durchführung des Reinigungsvorganges, wobei ein in einem Speicher der Steuer- und/oder Regeleinheit (24)abgespeichertes Programm die Mittel für die Betriebsweise der Feldspritze zur Durchführung des Reinigungsvorganges steuert und die durchzuführenden Schritte der Betriebsweise auf einem auf dem Zugfahrzeug vorhanden Display (33) zur Anzeige bringbar sind.

## Beschreibung

Die Erfindung betrifft eine landwirtschaftliche Feldspritze gemäß des Oberbegriffes des Patentanspruches 1.

Eine derartige landwirtschaftliche Feldspritze wird in der DE 10 2007 053 114 A1 beschrieben. Bei dieser landwirtschaftlichen Feldspritze werden aufgrund des hinterlegten Programms in Verbindung mit einer in dem Speicher hinterlegten Applikationskarte für die zu behandelnde Fläche und einem Ortungssystem sowie der Feldspritze zugeordnete Sensoren zur Ermittlung der ausgebrachten Flüssigkeitsmittel die tatsächlich ausgebrachten Mengen ständig ermittelt, mit der Sollmenge und der noch zu behandelnde Restfläche verglichen. Aus diesen Daten berechnet der Bordcomputer die jeweils tatsächlich auszubringende Menge und passt sie ständig der Restfläche an, so dass bei Beendigung und Fertigstellung der zu behandelnden Fläche quasi bzw. zielgenau sämtliche angemischte Spritzmittelbrühe auf der zu behandelnden Fläche ausgebracht ist.

Weiterhin ist in dem Speicher des Bordcomputer ein Programm abgespeichert, welches zusätzlich automatisch den Reinigungsvorgang des Spritzmittelkreises bei Beendigung der Ausbringung der letzten Füllung des Spritzmittelbehälters vor Beendigung der Behandlung der gesamten Fläche eingeleitet und vor Beendigung der behandelnden Fläche abschließt.

Der Erfindung liegt die Aufgabe zu Grunde, die bekannte Betriebsweise der landwirtschaftlichen Feldspritze weiter zu verbessern.

Diese Aufgabe wird erfindungsgemäß dadurch gelöst, dass Mittel zur Durchführung des Reinigungsvorganges der Feldspritze vorhanden sind, dass Mittel für die Beeinflussung und/oder Einstellung der Betriebsweise der Feldspritze und/oder des die Feldspritze bewegende Zugfahrzeug zur Durchführung des Reinigungsvorganges, dass das in dem Speicher der Steuer- und/oder Regeleinheit abgespeicherte Programm die Mittel für die Betriebsweise der Feldspritze und/oder das die Feldspritze bewegende Zugfahrzeug zur Durchführung des Reinigungsvorganges steuert und/oder regelt und/oder die durchzuführenden Schritte der Betriebsweise auf einem auf dem Zugfahrzeug vorhanden Display zur Anzeige bringbar sind.

Infolge dieser Maßnahmen kann die in dem Spritzbehälter verbleibende Restmenge Spritzbrühe, insbesondere die technische Restmenge Spritzbrühe trotz Verdünnung mit der Reinigungsflüssigkeit mit gleich bleibender Wirkstoffkonzentrationen pro Flächeneinheit in einfacher Weise ausgebracht werden.

Diese gleichmäßige Ausbringung der Restmenge Spritzbrühe in mit der Reinigungsflüssigkeit in der verdünnten Weise lässt sich in einfacher Weise dadurch erreichen, dass das in dem Speicher der Steuer- und/oder Regeleinheit hinterlegte Programm verschieden ausgestaltete Reinigungsschritte zur Reinigung der Feldspritze aufweist.

Hierbei lässt sich diese gleichmäßige Ausbringung der Wirkstoffe bis zum Schluss des Ausbringung von Wirkstoffen dadurch erreichen, dass zumindest folgender Schritt der Betriebsweise für die Reinigung der Feldspritze abgespeichert ist, dass
- in der ersten Phase des Reinigungsvorganges eine Verdünnung der sich noch im Flüssigkeitstank befindlichen Spritzbrühe durch die zur Reinigung eingesetzte Flüssigkeit, vorzugsweise Klarwasser erfolgt, und zumindest annähernd gleichzeitig eine Reduzierung der Fahrgeschwindigkeit der Feldspritze durch geeignete Mittel durchgeführt wird und/oder eine Anweisung zur Reduzierung der Fahrgeschwindigkeit auf dem Display anzeigbar ist, und zwar derart, dass die auf dem Feld ausgebrachten Mengen der eingesetzten Wirkstoffe pro Flächeneinheit zumindest annähernd konstant haltbar ist.

Um bei Beendigung des Ausbring- und Reinigungsvorganges der Feldspritze möglichst keine Wirkstoffe mehr im Flüssigkeitstank und in den Leitungen der Feldspritze zu haben, ist vorgesehen, dass zumindest ein weiterer Schritt der Betriebsweise für die Reinigung der Feldspritze abgespeichert ist, dass
- bei Beendigung der letzten Phase des Reinigungsvorganges die Leitungen und/oder Ausbringdüsen mit zumindest annähernd ohne Wirkstoffen belastete Flüssigkeit, vorzugsweise Klarwasser gespült werden.

Die vorstehend geschilderten Vorteile des erfindungsgemäßen Systems lassen sich also dadurch erreichen, dass zumindest folgende Schritte der Betriebsweise für die Reinigung der Feldspritze abgespeichert sind, dass
- in der ersten Phase des Reinigungsvorganges eine Verdünnung der sich noch im Flüssigkeitstank befindlichen Spritzbrühe durch die zur Reinigung eingesetzte Flüssigkeit, vorzugsweise Klarwasser erfolgt, und zumindest annähernd gleichzeitig eine Reduzierung der Fahrgeschwindigkeit der Feldspritze durch geeignete Mittel durchgeführt wird und/oder eine Anweisung zur Reduzierung der Fahrgeschwindigkeit auf dem Display anzeigbar ist, und zwar derart, dass die auf dem Feld ausgebrachten Mengen der eingesetzten Wirkstoffe pro Flächeneinheit zumindest annähernd konstant haltbar ist,
- bei Beendigung der letzten Phase des Reinigungsvorganges die Leitungen und/oder Ausbringdüsen mit zumindest annähernd ohne Wirkstoffen belastete Flüssigkeit, vorzugsweise Klarwasser gespült werden.

Die Übergänge zwischen den einzelnen Phasen des Reinigungsvorganges lassen sich so gestalten, dass die erste Phase des Reinigungsvorganges kontinuierlich oder stufenweise durch Zwischenschaltung und/oder Einfügung von gegebenenfalls geeigneter Zwischenphasen des Reinigungsvorganges in die letzte Phase des Reinigungsvorganges übergeht.

Abschließend wird gemäß des Anspruches 7 ein Verfahren zur Durchführung des Reinigungsvorganges für eine Feldspritze nach zumindest einem der Ansprüche 1 bis 6 beansprucht.

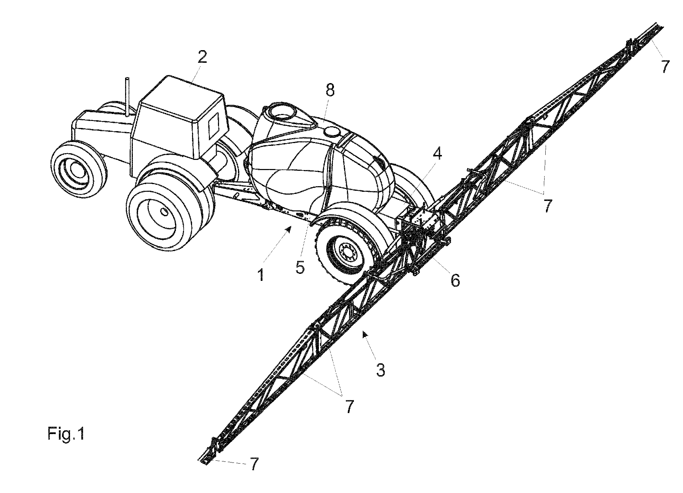

Weitere Einzelheiten der Erfindung sind der Beispielsbeschreibung und den Zeichnungen zu entnehmen. Hierbei zeigen
- Fig. 1: die als gezogene Feldspritze ausgebildete Verteilmaschine mit dem sich in Arbeitsstellung befindlichen Verteilergestänge in perspektivischer Ansicht und in Prinzipdarstellung und

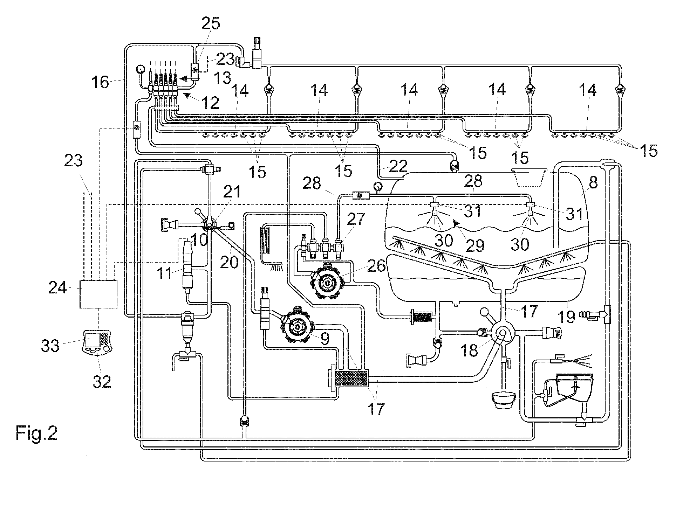

- Fig. 2: den Flüssigkeitsplan einer Feldspritze in Prinzipdarstellung und
- Fig. 3: ein Diagramm, in welchem die Ausbringung der Spritzflüssigkeit während des Spritzvorganges und des Reinigungsvorganges in schematischer Weise dargestellt sind.

Das als gezogene landwirtschaftliche Feldspritze 1 ausgebildete landwirtschaftliche Gerät ist über eine Anhängevorrichtung an einen Ackerschlepper 2 angekoppelt. Die Feldspritze 1 weist auf ihrer Rückseite ein Verteilergestänge 3 auf, welches über eine Kuppeleinrichtung 4 an dem rückwärtigen Ende des Rahmens 5 der Feldspritze 1 in Höhenrichtung verstellbar angeordnet ist. Das Verteilergestänge 3 besteht aus einem mittleren Gestängeabschnitt 6 und mehreren gelenkig miteinander verbundenen Gestängeabschnitten 7.

Die Feldspritze weist einen Flüssigkeitstank 8 zur Aufnahme der auszubringenden Pflanzenschutzmittelbrühe, eine motorisch angetriebene Pumpe 9, ein über einen Stellmotor 10 einstellbares Regelventil 11 aufweisende Dosierarmatur, die Teilbreitenschaltventile 12 mit den motorischen Einstellgliedern 13, die zu den einzelnen Teilbreitenleitungen 14 mit Spritzdüsen 15 bestückten Verteilergestänge führende Spritzleitung 16 auf.

Auf der Saugseite der Pumpe 9 ist die Saugleitung 17 angeschlossen, die unter Zwischenschaltung eines zentralen Umschaltventils 18 im unteren Bereich des Flüssigkeitstank 1 mündet. An dem Umschaltventil 18 können noch weitere Leitungen zum externen Anschluss von Wassertanks, Vorrichtungen zum Ansaugen von Wasser aus Gewässern, zum Anschluss des Klarwasserbehälters 19 sowie eine Ablaufleitung angeschlossen sein. Auf der Druckseite der Pumpe 9 ist eine Druckleitung 20 angeordnet, die unter Zwischenschaltung eines weiteren Umschaltventils 21 zu dem Regelventil 11 der Dosierarmatur und weiterer Einrichtungen der Feldspritze führt. Die verschiedenen Rücklaufleitungen sind zu einer Sammelrücklaufleitung 22 zusammengefasst. Die Rücklaufleitung 2 mündet in dem Vorratstank 9.

In der von den dem Regelventil 11 zu den Teilbreitenleitungen 14 führenden Spritzleitung 16 ist der über die Signalleitung 23 mit der elektronischen Steuer- und/oder Regeleinrichtung 24 verbundene Durchflussmesser 25 angeordnet.

Unterhalb des Flüssigkeitstanks 8 ist der Klarwasserbehälter 19 zur Aufnahme von Klarwasser angeordnet. Diesem Klarwasserbehälter 19 ist eine zweite Pumpe 26, Regelventile 27 sowie die von den Regelventilen 27 abgehende Reinigungsleitung 28 einer Reinigungseinrichtung 29 für die Innenreinigung des Flüssigkeitstanks 8 auf. An der Reinigungsleitung 28 sind im Flüssigkeitstank 8 mehrere Reinigungsdüsen 30 angeordnet.

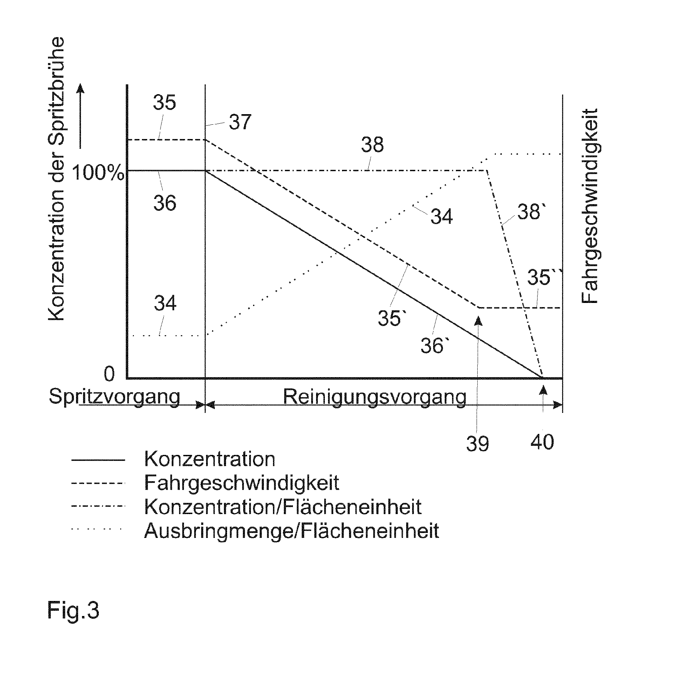

In der Reinigungsleitung 28 sind über die elektronische Steuer- und/oder Regeleinrichtung 24 ansteuerbare Ventilelemente 31 der Reinigungseinrichtung 29 angeordnet. An den Ventilelementen 31 sind die Reinigungsdüsen 30 angeordnet. Mittels der von der elektronische Steuer - und/oder Regeleinrichtung 24 ansteuerbaren Ventilelemente 31 wird den Innenreinigungsdüsen 30 bei dem Reinigungsvorgang des inneren Bereiches des Flüssigkeitstanks 8 innerhalb definierter Zeitintervalle Flüssigkeit zugeführt und zwar derart, dass die beim Reinigungsvorgang über die Reinigungsdüsen dem Flüssigkeitstank 8 zugeführte Reinigungsflüssigkeitsmenge während des Reinigungsvorganges kleiner als die während des Reinigungsvorganges über die Ausbringleitung ausgebrachte Flüssigkeitsmenge ist. Über die ansteuerbaren Ventilelemente 31 wird zur Aufrechterhaltung des für den Reinigungsvorgang erforderlichen Betriebsmitteldruckes den Innenreinigungsdüsen die Reinigungsflüssigkeit in definierten Zeitintervallen über die Dosiereinrichtung zugeführt, wie in dem jeweiligen Diagramm gemäß Fig. 3 dargestellt ist.

In dem Speicher der als Bordcomputer ausgebildeten elektronischen Steuer- und oder Regeleinrichtung 24, die die Bedienungseinheit 32 mit dem Display 33 aufweist, sind verschiedene Betriebsweisen der Feldspritze hinterlegt. In dem Speicher ist zumindest ein Programm abgespeichert, so dass die Steuer- und/oder Regeleinheit 24 in der Lage ist, vorzugsweise bei der Ausbringung der letzten Füllung des Spritzmittelbehälters 8 zusätzlich automatisch den Reinigungsvorgang des Spritzmittelkreises und/oder zumindest des Spritzmittelbehälters 8 vor und/oder bei Beendigung der letzten Füllung der Spritzmittelbehälters 8 einzuleiten und abzuschließen.

Hierzu sind die Innenreinigungsdüsen 30 und die Ventilelemente 31 zur Durchführung des Reinigungsvorganges der Feldspritze vorgesehen. Über die Ventilelemente 31 kann die aus den Innenreinigungsdüsen 30 austretende Menge der Reinigungsflüssigkeit, in der Regel Klarwasser aus dem Behälter 19 entsprechend der gewünschten Durchführung des Reinigungsvorganges eingestellt werden. Hierzu sind in dem Speicher der Steuer- und/oder Regeleinheit 24 entsprechende Programme abgespeichert, mittels derer die Pumpe 26 und die Ventilelemente 31 angesteuert werden können. Weiterhin kann auf dem Display 33 der Bedieneinheit 32 des Bordcomputers 24 die durchzuführenden Schritte der Betriebsweise zur Anzeige gebracht werden. Die Bedieneinheit 32 des Bordcomputers 24 mit dem Display 33 ist auf dem Zugfahrzeug angeordnet. Somit ist in dem Speicher der Steuer- und/oder Regeleinheit 24 ein Programm abgespeichert, mit dem die Mittel für die Betriebsweise der Feldspritze 1 und/oder des die Feldspritze 1 bewegenden Zugfahrzeuges 2 zur Durchführung des Reinigungsvorganges steuert und/oder regelt und/oder die durchzuführenden Schritte der Betriebsweise auf einem auf dem Zugfahrzeug 2 vorhandenen Display 33 zur Anzeige bringt.

Wie das Diagramm in Fig. 3 zeigt wird während des Spritzvorganges eine gleich dringende Ausbringmenge pro Flächeneinheit ausgebracht, wie durch die Linie 34 gezeigt ist. Gleichzeitig wird die Fahrgeschwindigkeit der Feldspritze sowie die ausgebrachte Konzentration der Spritzflüssigkeit konstant gehalten, wie die beiden Linien 35 und 36 im Bereich des eigentlichen Spritzvorganges zeigen.

An der mit der senkrechten Linie 37 markierten Stelle soll bei Beendigung des eigentlichen Spritzvorganges der Reinigungsvorgang eingeleitet werden. In dieser ersten Phase des Reinigungsvorganges wird eine Verdünnung der sich noch im Flüssigkeitstank 8 befindlichen Spritzbrühe durch diesen Reinigungsvorgang Flüssigkeit, vorzugsweise Klarwasser durchgeführt, in dem über die Pumpe 26, die Ventile 27, die Reinigung Leitung 28 über die Ventile 31 den Innenreinigungsdüsen 30 das Klarwasser aus dem Behälter 19 zugeführt wird. Hierdurch erfolgt eine in Reinigung des Tanks 8 und eine Verdünnung der Spritzbrühe in dem Tank 8. Um nun über die Restfläche des noch zu bearbeitenden Feldes die Konzentration der ausgebrachten Spritzbrühe pro Flächeneinheit konstant zu halten, wie die Linie 36' zeigt, wird die Fahrgeschwindigkeit, wie die in das Diagramm eingetragene Linie 35' zeigt, reduziert. Hierdurch wird trotz sinkender Konzentration der Spritzbrühe, wie die Linie 36' zeigt, bei Erhöhung der Ausbringmenge pro Flächeneinheit die Konzentration der ausgebrachten Wirkstoffe pro Flächeneinheit, wie die Linie 38 zeigt, konstant gehalten. Um dieses zu erreichen wird auf dem Display 33 eine Anweisung zur Reduzierung der Fahrgeschwindigkeit angezeigt, und zwar derart, dass die auf dem Feld ausgebrachte Menge der eingesetzten Wirkstoffe pro Flächeneinheit zumindest annähernd konstant gehalten wird. Auch ist es möglich, die landwirtschaftliche Feldspritze 1 und das Zugfahrzeug 2 in nicht dargestellter Weise so auszustatten, dass entsprechende geeignete Mittel vorhanden sind, mittels deren automatisch eine Reduzierung der Fahrgeschwindigkeit der Feldspritze 1 in geeigneter und angepasster Weise durchgeführt wird. Ab der Stelle 39 wird die Fahrgeschwindigkeit nicht weiter reduziert, so dass sie auf niedrigen Niveau konstant bleibt, wie die Linie 35" zeigt. Gleichzeitig fällt auch die Konzentration der Wirkstoffe ab, wie die Linie 38' zeigt. Bei Beendigung der letzten Phase des Reinigungsvorganges, der an der Stelle in dem Diagramm gemäß Fig. 3 eintritt, werden die Leitungen 14, 16, 17 und/oder Ausbringdüsen 15 mit zumindest annähernd ohne Wirkstoffen belastete Flüssigkeit, vorzugsweise Klarwasser gespült, wie dem Diagramm gemäß Fig. 3 entnehmbar ist.

Die erste Phase des Reinigungsvorganges, wird, wie in Fig. 3 dargestellt kontinuierlich ausgeführt, so dass er in die letzte Phase des Reinigungsvorganges, wie vor beschrieben über geht. Auch ist es möglich, die erste Phase des Reinigungsvorganges stufenweise durch geeignete Zwischenphasen des Reinigungsvorganges in die letzte Phase des Reinigungsvorganges zu überführen.

Somit ist dargestellt, dass aufgrund des Reinigungsvorganges der Feldspritze 1 die Feldspritze 1 oder das die Feldspritze 1 ziehende Zugfahrzeug 2 hinsichtlich ihrer Fahrgeschwindigkeit mittels der vorhandenen Mittel entsprechend beim Reinigungsvorgang der Feldspritze 1 gesteuert und oder geregelt wird.

## Patentansprüche

1. Landwirtschaftliche Feldspritze mit einer Spritzeinheit, die mindestens einen Spritz- und/oder Flüssigkeitsbehälter, zumindest eine mit dem Behälter verbundene Pumpe und zumindest einen Strömungsmittelkreis besitzt, welcher Spritzdüsen und diese mit der Pumpe verbindende Leitungen aufweist, einer vorzugsweise als Bordcomputer ausgebildeten elektronischen Steuer- und/oder Regeleinrichtung zum Steuern und/oder Regeln der Betriebsweise der Feldspritze während des Spritzvorganges, sowie Mitteln zum Steuern und/oder Regeln des Spritzvorganges, wobei diese Mittel von der Steuer - und/oder Regeleinheit ansteuerbare, motorisch betätigbare Ventile aufweist, wobei die Steuer- und/oder Regeleinheit zumindest einen Speicher, in dem zumindest ein Programm mit vorzugsweise verschiedenen Betriebsweisen der Feldspritze hinterlegt ist, aufweist, wobei in dem Speicher zumindest ein Programm abgespeichert ist, so dass die Steuer- und/oder Regeleinheit in der Lage ist, vorzugsweise bei der Ausbringung der letzten Füllung des Spritzmittelbehälters zusätzlich automatisch den Reinigungsvorgang des Spritzmittelkreises und/oder zumindest eines Spritzmittelbehälters vorzugsweise vor und/oder bei Beendigung der Ausbringung der letzten Füllung des Spritzmittelbehälters einzuleiten und abzuschließen, **dadurch gekennzeichnet, dass** Mittel zur Durchführung des Reinigungsvorganges der Feldspritze vorhanden sind, dass Mittel für die Beeinflussung und/oder Einstellung der Betriebsweise der Feldspritze (1) und/oder des die Feldspritze (1) bewegende Zugfahrzeug (2) zur Durchführung des Reinigungsvorganges, dass das in dem Speicher der Steuer - und/oder Regeleinheit (24) abgespeicherte Programm die Mittel für die Betriebsweise der Feldspritze (1) und/oder das die Feldspritze (1) bewegende Zugfahrzeug (2) zur Durchführung des Reinigungsvorganges steuert und/oder regelt und/oder die durchzuführenden Schritte der Betriebsweise auf einem auf dem Zugfahrzeug (2) vorhanden Display (33) zur Anzeige bringbar sind.

2. Feldspritze nach Anspruch 1, **dadurch gekennzeichnet, dass** das in dem Speicher der Steuer- und/oder Regeleinheit (24) hinterlegte Programm verschieden ausgestaltete Reinigungsschritte zur Reinigung der Feldspritze (1) aufweist.

3. Feldspritze nach zumindest einem der vorstehenden Ansprüche, **dadurch gekennzeichnet, dass** zumindest folgender Schritt der Betriebsweise für die Reinigung der Feldspritze (1) abgespeichert ist, dass
- in der ersten Phase des Reinigungsvorganges eine Verdünnung der sich noch im Flüssigkeitstank (8) befindlichen Spritzbrühe durch die zur Reinigung eingesetzte Flüssigkeit, vorzugsweise Klarwasser erfolgt, und zumindest annähernd gleichzeitig eine Reduzierung der Fahrgeschwindigkeit (35') der Feldspritze (1) durch geeignete Mittel durchgeführt wird und/oder eine Anweisung zur Reduzierung der Fahrgeschwindigkeit (35') auf dem Display (32) anzeigbar ist, und zwar derart, dass die auf dem Feld ausgebrachten Mengen der eingesetzten Wirkstoffe pro Flächeneinheit (38) zumindest annähernd konstant haltbar ist.

4. Feldspritze nach Anspruch, **dadurch gekennzeichnet, dass** zumindest ein weiterer Schritt der Betriebsweise für die Reinigung der Feldspritze abgespeichert ist, dass
- bei Beendigung der letzten Phase des Reinigungsvorganges die Leitungen (14, 16, 17) und/oder Ausbringdüsen (15) mit zumindest annähernd ohne Wirkstoffen belastete Flüssigkeit, vorzugsweise Klarwasser gespült werden.

5. Feldspritze nach zumindest einem Ansprüche 1 oder 2, **dadurch gekennzeichnet, dass** zumindest folgende Schritte der Betriebsweise für die Reinigung der Feldspritze abgespeichert sind, dass
- in der ersten Phase des Reinigungsvorganges eine Verdünnung der sich noch im Flüssigkeitstank (8) befindlichen Spritzbrühe durch die zur Reinigung eingesetzte Flüssigkeit, vorzugsweise Klarwasser erfolgt, und zumindest annähernd gleichzeitig eine Reduzierung der Fahrgeschwindigkeit (35') der Feldspritze (1) durch geeignete Mittel durchgeführt wird und/oder eine Anweisung zur Reduzierung der Fahrgeschwindigkeit (35') auf dem Display (32) anzeigbar ist, und zwar derart, dass die auf dem Feld ausgebrachten Mengen der eingesetzten Wirkstoffe pro Flächeneinheit (38) zumindest annähernd konstant haltbar ist,
- bei Beendigung der letzten Phase des Reinigungsvorganges die Leitungen (14, 16, 17) und/oder Ausbringdüsen (15) mit zumindest annähernd ohne Wirkstoffen belastete Flüssigkeit, vorzugsweise Klarwasser gespült werden.

6. Feldspritze nach Anspruch 4 oder 5, **dadurch gekennzeichnet, dass** die erste Phase des Reinigungsvorganges kontinuierlich oder stufenweise durch geeignete Zwischenphasen des Reinigungsvorganges in die letzte Phase des Reinigungsvorganges übergeht.

7. Verfahren zur Durchführung des Reinigungsvorganges für eine Feldspritze nach zumindest einem der vorstehenden Ansprüche.
